# EUROPEAN PATENT SPECIFICATION

(11) **EP 0 656 533 B1**
(45) Date of publication and mention of the grant of the patent: **24.03.1999**
(21) Application number: 94307404.7
(22) Date of filing: 10.10.1994
(51) Int. Cl.: G01K 3/14, G01K 7/00

(54) **Temperature detecting methods and systems**
Vorrichtungen und Verfahren zur Temperaturdetektion
Méthodes et systèmes de détection de température

(30) Priority: 03.12.1993 GB 9324805
(43) Date of publication of application: 07.06.1995
(73) Proprietor: KIDDE FIRE PROTECTION LIMITED, Derby DE2 4EE (GB)
(72) Inventor: Powell, Brain David, Maidenhead, Berkshire, SL6 3UR (GB)
(74) Representative: Foster, David Martyn

(56) References cited:
- EP-A- 0 028 142
- EP-A- 0 218 519
- EP-A- 0 253 085
- EP-A- 0 487 730
- US-A- 3 059 229

## Description

The invention relates to a temperature detecting system comprising an elongate temperature sensor having two electrical parameters which vary according to respectively different predetermined relationships with temperature and measuring means for measuring said parameters.

The invention also relates to a temperature detecting method comprising the steps of deploying an elongate temperature sensor having two electrical parameters which vary according to respectively different predetermined relationships with temperature and measuring said parameters.

Such a temperature detecting system and method are known from US-A-3,059,229. Different electrical characteristics of an elongate temperature sensitive element are monitored independently and each characteristic is used to set a different alarm condition.

EP-A-0487,730 discloses a temperature detector in which an a.c. voltage waveform is applied to an elongate temperature sensor and a temperature measurement is obtained from the phase angle of the sensor output.

EP-A-028,142 discloses a fault detecting sensor incorporating a solid conductive polymer composition which undergoes a measurable change of capacitance when exposed to excessive temperature.

EP-A-0218,519 discloses a temperature sensitive cable having a resistance and capacitance whose product is relatively independent of cable length at a preset alarm temperature.

One embodiment of the invention to be described in more detail below comprises an elongate temperature detector having distributed electrically insulating material whose parameters vary with temperature such that measurement of the parameters enables the detection of changes in temperature along the detector. In the embodiment to be described, localised increases in temperature can be distinguished from changes in average temperature of the detector, and the position of localised changes in temperature can be detected.

According to the invention the temperature detecting system is characterised by a control unit arranged to calculate from one of the measured parameters a value for the other measured parameter using said predetermined relationships, arranged to compare the calculated value with the measured value of the other parameter and arranged to detect in dependence on the comparison whether the sensor is in a first condition in which the sensor is subjected to a substantially uniform temperature change over its total length or in a second condition in which a section of the sensor is subjected to a localised temperature change.

According to a further aspect of the invention, the temperature detecting method is characterised by the steps of calculating from one of the measured parameters a value for the other measured parameter using said predetermined relationships, comparing the calculated value with the measured value of the other parameter and detecting in dependence on the comparison whether the sensor is in a first condition in which the sensor is subjected to a substantially uniform temperature change over its total length or in a second condition in which a section of the sensor is subjected to a localised temperature change.

Temperature detecting systems and methods according to the invention will now be described, by way of example only, with reference to the accompanying diagrammatic drawings in which:
Figure 1 is an overall and greatly simplified schematic circuit diagram of one of the systems showing its use of an elongate temperature sensor;
Figure 2 is a schematic circuit diagram of the system of Figure 1 in a mode for detecting localised temperature increases in the temperature sensor;
Figure 3 shows waveforms occurring in the circuit of Figure 2;
Figures 4A and 4B are graphs respectively showing the variation of resistance and capacitance against temperature in the elongate temperature sensor;
Figure 5 is a flow chart for explaining the operation of the system in the mode illustrated in Figure 2; and
Figure 6 is a schematic circuit diagram of the system in a mode for detecting the position of a localised temperature increase in the elongate temperature sensor.

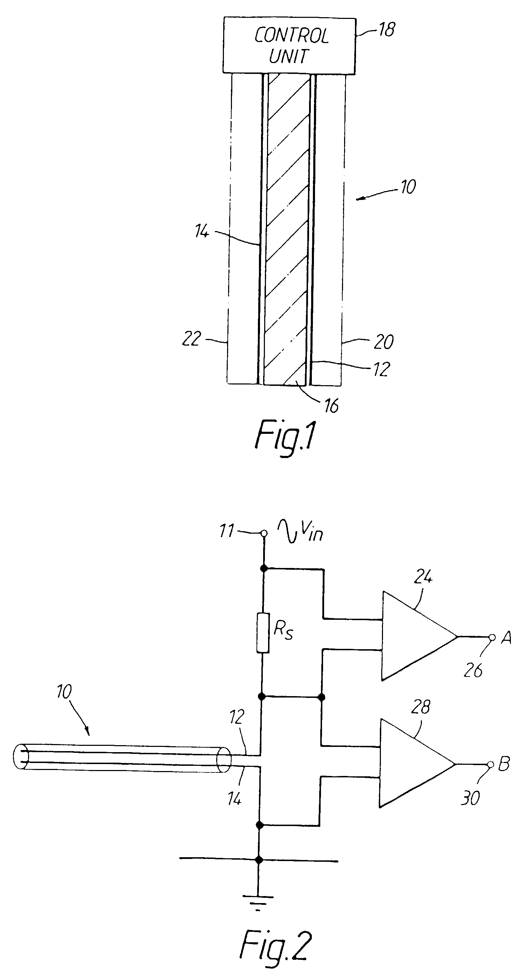

As shown in Figure 1, an elongate temperature sensor 10 comprises two conductors 12 and 14 which are insulated from each other by temperature-dependent electrically insulating material shown diagrammatically at 16. A control unit 18 carries out certain electrical measurements on the sensor 10. The results of these measurements depend on the temperature of the material 16. In a manner to be described in more detail below, the measurements enable changes in overall temperature of the sensor to be sensed and also localised changes in temperature and the position of such localised changes.

Each conductor 12,14 may be connected back to the control unit 18 by a respective conducting link 20,22 shown dotted. The conducting links 20 and 22 are insulated with normal electrical insulation and are only used for continuity testing; that is, they enable the control unit 18 to detect breaks in the conductors 12 and 14.

In one form to be discussed in more detail, the temperature sensor 10 can be considered to comprise distributed electrical resistance in parallel with distributed electrical capacitance. The material 16 is such that its electrical resistance decreases with increasing temperature while its capacitance increases with increasing temperature. For example, it can take the form of an elongate temperature sensor sold under the trademark ALARMLINE. In one mode of operation of the system, now to be described with reference to Figure 2, the control unit measures the resistance and capacitance between the conductors 12 and 14 of the sensor 10.

The temperature sensor 10 is illustrated only diagrammatically in Figure 2, the temperature dependent insulating material 16 being omitted for clarity. As shown in Figure 2, the control unit 18 (Fig. 1) applies the input waveform Vᵢₙ across the temperature detector 10 through an input terminal 11 and a fixed series resistance Rₛ. The input waveform Vᵢₙ is an AC waveform, and may, for example, be 2V rms at 100 Hz. The value of Rₛ may be 10 Kohm.

A first differential buffer amplifier 24 is connected to measure the voltage developed across the resistor Rₛ and produces an output voltage waveform A at a terminal 26.

A second differential buffer amplifier 28 measures the voltage developed across the temperature sensor 10 and produces an output voltage waveform B at a terminal 30.

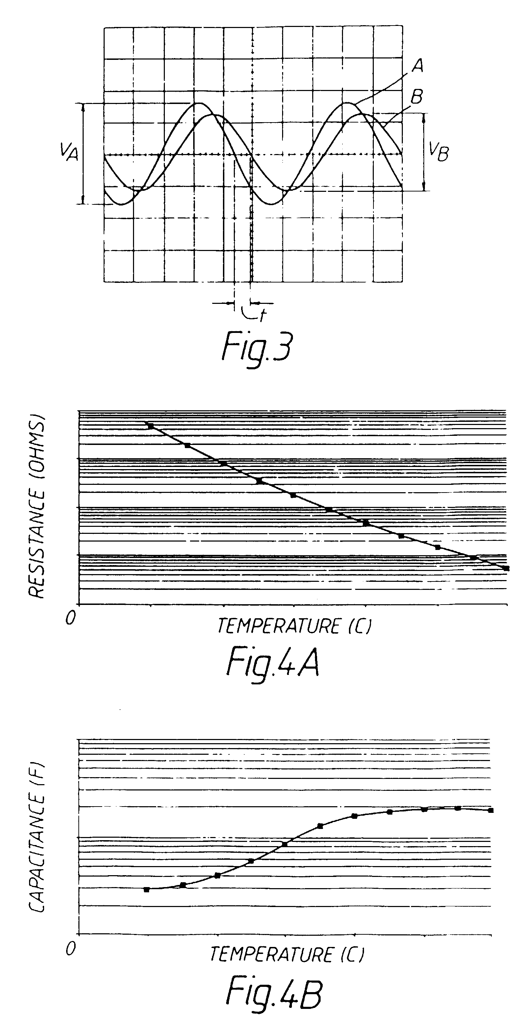

Figure 3 shows the waveforms A and B which are typically produced. As indicated, the amplitude V_{A} of the waveform A is greater than the amplitude V_{B} of the waveform B, and there is a phase difference between the waveforms of A and B as indicated by the time difference, t, between zero crossings.

The control unit 18 (Fig. 1) measures V_{A}, V_{B}, and the time difference t. This enables the control unit to determine the impedance Z and the phase difference Φ, where$\text{Z=} \frac{{\text{R}}_{\text{s}} {\text{V}}_{\text{B}}}{{\text{V}}_{\text{A}}}$$\text{φ =} \frac{\text{2πt}}{\text{f}}$ f being the applied frequency of the waveform Vᵢₙ.

On the assumption that the temperature sensor 10 can be considered to be distributed electrical resistance Rₚ in parallel with distributed electrical capacitance Cₚ, it follows that${\text{R}}_{\text{p}} \text{=} \frac{\text{Z}}{\text{cosφ}}$${\text{C}}_{\text{p}} \text{=} \frac{\text{sinφ}}{\text{2πfZ}}$ Figures 4A and 4B show how Rₚ and Cₚ respectively vary against temperature for a predetermined length of the temperature sensor 10 heated uniformly. Figures 4A and 4B show that the manner in which the resistance varies with temperature differs from that in which capacitance varies with temperature. This fact enables the system to distinguish a condition in which the sensor 10 is heated uniformly from a condition in which the sensor 10 is heated locally, and also enables the temperature to be measured.

This can be achieved in various different ways.

One way involves measuring Rₚ and Cₚ as a function of temperature for different lengths of the sensor 10. The experimental results so produced enable two equations to be derived:-${\text{R}}_{\text{p}} {\text{= f}}_{\text{1}} \text{(T, L)}$${\text{C}}_{\text{p}} {\text{= f}}_{\text{2}} \text{(T,L)}$ where T is the mean temperature of a sensor of length L.

The control unit 18 therefore operates to measure Rₚ and Cₚ in the manner described above with reference to Equations (1) to (4). The total length Lₜ of the sensor 10 is known. Therefore, using Equation (5), the control unit calculates a mean temperature value Tₘ by substituting the measured value of Rₚ. The resultant value of Tₘ will therefore be the mean temperature for the sensor 10 corresponding to the measured value of Rₚ, on the assumption that the sensor 10 is heated uniformly along its length.

The control unit 18 then substitutes the values of Lₜ (the known total length of the sensor 10) and Tₘ into Equation (6) to calculate a corresponding value of Cₚₑ. This calculated value Cₚₑ is then compared with the actual measured value Cₚ. If the sensor 10 is in fact being heated uniformly to the temperature T, Cₚₑ will be substantially the same as the measured value Cₚ.

However, if there is a significant difference between Cₚₑ and Cₚ, it can be assumed that sensor 10 is not in fact being heated uniformly but is being heated non-uniformly.

The control unit 18 now operates to produce an estimate of the length of the heated section of the sensor and the temperature to which it is heated. This process is based on the simplifying assumption that the sensor has two zones, one of length L₁ at a temperature T₁ and the other of length L₂ at a temperature T₂ where${\text{L = L}}_{\text{1}} {\text{+ L}}_{\text{2}}$ and uses an iterative process as will now be described.

On the assumption that the sensor is made up of the two sections referred to above, one of length L₁ at a temperature T₁ and the other of length L₂ at a temperature of T₂, with each section comprising distributed resistance in parallel with distributed capacitance, it follows that${\text{R}}_{\text{P}} \text{=} \frac{\text{1}}{\frac{\text{1}}{{\text{ƒ}}_{\text{1}} {\text{(T}}_{\text{1}} \text{,L} \text{1} \text{)}} \text{+} \frac{\text{1}}{{\text{ƒ}}_{\text{1}} {\text{(T}}_{\text{2}} {\text{,L}}_{\text{2}} \text{)}}}$${\text{C}}_{\text{P}} \text{=} {\text{ƒ}}_{\text{2}} {\text{(T}}_{\text{1}} {\text{,L}}_{\text{1}} \text{)} {\text{+ ƒ}}_{\text{2}} {\text{(T}}_{\text{2}} {\text{,L}}_{\text{2}} \text{)}$

Initially, the control unit 18 sets a value for T₂ which is slightly less (e.g. 5^{o} less) than the previously calculated temperature value Tₘ, and sets a value for L₁ which is half the total length Lₜ of the sensor 10. The resultant value of L₂ is obviously known from Equation 7. Therefore, using Equation 8 and the previously measured value for Rₚ, the control unit 18 can calculate a value for T₁ from this Equation. This value of T₁, together with the known values of L₁, T₂ and L₂ are then substituted into Equation 9 to produce a new value of Cₚₑ. If this value of Cₚₑ is found to be substantially equal to the previously measured value for Cₚ, then clearly this indicates that the values of T₁,T₂,L₁ and L₂ are the actual values obtaining in the sensor. In the general case, of course, the value of Cₚₑ will not be equal to Cₚ. The above-mentioned process is therefore repeated, but this time the temperature T₂ is decreased again by the same decremental amount (e.g. 5^{o}) and the value of L₁ is set to half its previous value (so that it is now equal to Lₜ/4). Using the resultant new value for L₂ (from Equation 7), and the new value for L₁, together with the measured value of Rₚ, a new value for T₁ is calculated from Equation 8. Using this new value for T₁, Equation 9 is then used to produce a new value for Cₚₑ. Once more, this value of Cₚₑ is compared with the actual measured value for Cₚ. If the comparison should show substantial equality, then the values of T₁,L₁ and L₂ are those which can be assumed to exist in the actual sensor. If (as in the general case) this equality is not observed, the process is repeated again, with the value of T₂ being decreased by a further decremental amount (5^{o}) and with the value of L₁ decreased or increased by diminishing amounts depending on whether Cₚₑ is greater than or less than Cₚ. The process continues until the value of Cₚₑ calculated in accordance with Equation 9 is found to be substantially equal to the measured value of Cₚ.

It will be appreciated that the temperature T₂ must not be decreased below the minimum expected ambient temperature. The latter value therefore represents the lowest value to which T₂ is decremented (but, if necessary, continued reductions in L₁ take place).

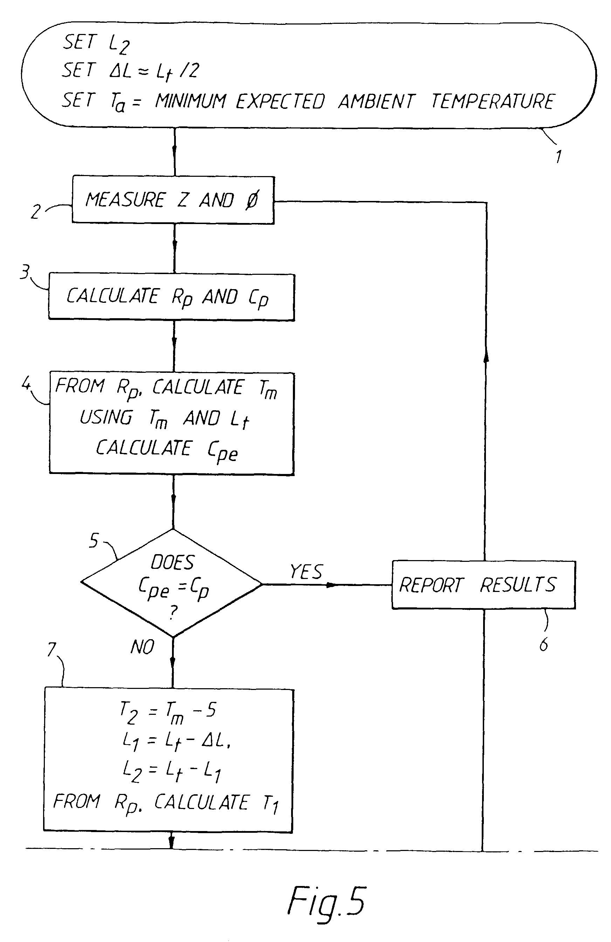

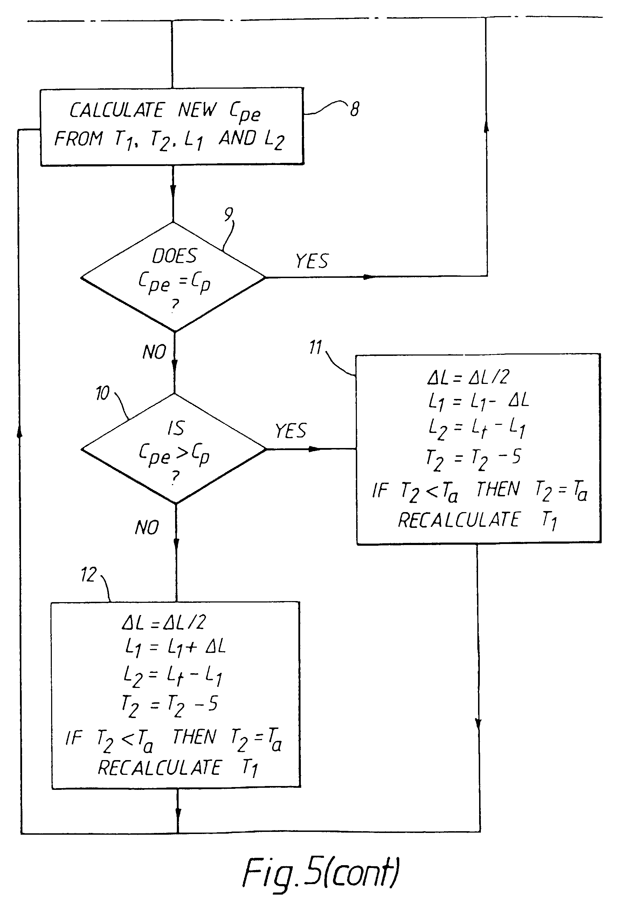

The flow chart of Figure 5 illustrates the iterative process diagrammatically.

In Figure 5, step 1 represents the setting of the initial condition. Step 2 represents the process carried out by the control unit 18 using the circuit of Figure 2 as explained above. Using the measured values of Z and 0, the control unit then calculates Rₚ and Cₚ as explained above in accordance with Equations (1) to (4) (step 3). Using Equations (5) and (6), the control unit then calculates a value for Cₚₑ (step 4). At step 5, the control unit 18 compares the calculated value for Cₚₑ with the measured value for Cₚ. If substantial equality is determined, this indicates that the sensor 10 is being heated substantially uniformly and the corresponding output is produced (step 6).

However, if equality is not determined, the control unit 18 begins the iterative process outlined above using Equations 8 and 9. As indicated in step 7, and as explained above, the temperature T₂ is set to be equal to the value of temperature Tₘ less a decremental amount of 5^{o} and the value of L₁ is set to be equal to half the total length of the sensor, Lₜ. From these values and the measured value of Rₚ, a value for T₁ is calculated. Using the resultant value of T₁ together with the values of T₂, L₁ and L₂, a new value for Cₚₑ is calculated (step 8) and then compared with the measured value of Cₚ (step 9). If equality is detected, then an appropriate output is produced (step 6). If equality is not detected, the control unit 18 determines whether the calculated value of Cₚₑ is greater than the measured value of Cₚ or not (step 10). If Cₚₑ is determined to be greater than Cₚ, the value of L₁ is halved (so as to be one quarter of Lₜ), see step 11.

The resultant value for L₂ is calculated and temperature T₂ is decreased again by the decremental amount (5^{o}). Using Equation 8, a new value for T₁ is calculated and then substituted in Equation 9 to produce a new value for Cₚₑ as indicated in step 8.

Alternatively, if Cₚₑ is determined to be less than Cₚ in step 10, the control unit increases the value for L₁ so as to become equal to three-quarters of L₂ resulting in a corresponding decrease in the value of L₂, and the value of the temperature T₂ is reduced by the decrement of 5^{o}, all as shown in step 12. Again, a new value for T₁ is calculated and then used to produce a new value for Cₚₑ as indicated in step 8. This process repeats until step 9 determines substantial equality between Cₚₑ and Cₚ.

Steps 11 and 12 show that T₂ is not decreased below the minimum expected ambient temperature Tₐ.

The ability of the control unit 18 to determine that a section of the sensor 10 is heated to a higher temperature than the remainder, and to distinguish this condition from the condition in which the whole sensor is heated, improves the sensitivity of the sensor. If the control unit 18 were only able to sense the average temperature of the sensor 10 (by measuring the resistance, only, of the sensor, for example), it would only be able to detect elevated temperatures when the resistance value of the sensor decreased below a fixed threshold value corresponding to a maximum ambient temperature which would have to be pre-set into the control unit. However, this resistance threshold could also correspond to a relatively high temperature over a short section of the sensor, the rest of the sensor being at a low ambient temperature. The control unit would thus be unable to detect this condition.

Using the process described above with reference to Figures 1 to 5, however, the control unit is able to detect the presence of a hot section in the sensor even when the actual ambient temperature in which the sensor is situated, and which is thus the temperature of the remainder of the sensor, is well below the maximum expected ambient temperature.

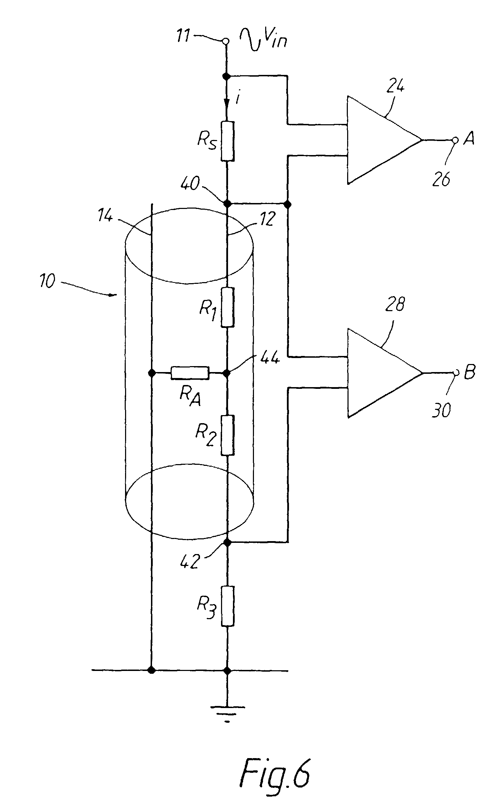

Figure 6 illustrates how the control unit may determine the position along the length of the sensor 10 of an overheated section. The control unit 18 may be arranged to enter this mode when it has determined, in the manner described with reference to Figures 1 to 5, that a locally overheated section of the sensor 10 exists.

Alternatively, it may simply enter the mode when the measured resistance value Rₚ falls below a threshold value. In the latter case, it could of course be that the whole of the sensor is being heated to an elevated temperature; in that case, the control unit will not indicate the location of any local overheated section but will indicate that there is a general overheat.

Figure 6 shows the conductors 12 and 14 of the sensor 10. The two ends of conductor 12 are indicated at 40 and 42 and it is assumed that there is a localised overheat section at 44 in the sensor 10, there being a consequential reduced resistance value R_{A} between the conductors 12 and 14 at the position 44. It is further assumed that the length along the sensor between the end 40 and the overheat 44 is l₁ and the resistance of this length of the conductor 12 is R₁. Similarly, it is assumed that the length between the overheat 44 and the end 42 of the sensor is l₂ and the electrical resistance of the conductor 12 over this length is R₂.

As shown in Figure 6, the circuit is again fed with an input waveform Vᵢₙ which may, for example, be 2 V rms at 100 Hz. Instead, however, a DC input may be used. Vᵢₙ is fed to the sensor 10 through input terminal 11 and a resistor Rₛ which, as in Figure 2, may be 10 kohm. In the case of Figure 6, however, Vᵢₙ is fed across one conductor 12 only of the sensor through a resistor R₃ of value 1 Mohm.

As before, a differential buffer amplifier 24 measures the voltage across resistor Rₛ and produces an output waveform A at terminal 26, the amplitude of this waveform being V_{A}.

The second differential buffer amplifier 28, however, is now connected to measure the voltage across the sensor conductor 12. Again, it produces an output waveform B at terminal 30, this waveform being V_{B}.

If R_{A} is very much less than 1 Mohm, the current i from the input terminal 11 will flow through Rₛ, R₁ and R_{A}, with negligible current flow through R₂. Therefore, to a first approximation${\text{V}}_{\text{B}} \text{=} {\text{iR}}_{\text{1}}$ and$\text{i} \text{=} \frac{{\text{V}}_{\text{A}}}{{\text{R}}_{\text{S}}}$ Therefore,${\text{R}}_{\text{1}} \text{=} \frac{{\text{V}}_{\text{B}} {\text{R}}_{\text{S}}}{{\text{V}}_{\text{A}}}$ If the resistance of the conductor 12 of the sensor 10 is assumed to be r ohms per metre, then${\text{R}}_{\text{1}} {\text{= l}}_{\text{1}} \text{r.}$ Therefore, from Equations (12) and (13),${\text{l}}_{\text{1}} \text{=} \frac{{\text{V}}_{\text{B}} {\text{R}}_{\text{S}}}{{\text{V}}_{\text{A}} \text{r}}$

The length l₂ (that is, the length from the end 42 of conductor 12 to the overheat 44) can be determined by reversing the connections of the sensor conductor 12, so as to connect its end 40 to the resistor R₃ and its end 42 to the resistor Rₛ, and then repeating the measurements.

If the overheat event does not comprise a point on the conductor but a section of significant length, measurements l₁ and l₂ will not coincide with a single point. The degree of mismatch between the positions indicated by l₁ and l₂ will be an estimate of the heated length.

Measurement of the resistance and capacitance values Rₚ and Cₚ as indicated with reference to Figure 2, enables certain faults to be detected. Thus, a short circuit between the conductors 12 and 14 of the sensor 10 is indicated by a low value for Rₚ and a zero value for Cₚ. The position of such a short circuit can be identified by the event location process described with reference to Figure 6. An open circuit is detectable by loss of continuity in the conductor. The position of the open circuit can be estimated from the value of Cₚ.

The iterative process described with reference to Figure 5 can be implemented by means of a microprocessor.

The invention is capable of exploitation in industry in a wide range of temperature detecting applications in which there is a requirement to detect for occurrence and/or position of localised changes in temperature.

## Claims

1. A temperature detecting system, comprising an elongate temperature sensor (10) having two electrical parameters (Rₚ,Cₚ) which vary according to respectively different predetermined relationships with temperature and measuring means (24,28,18) for measuring the said parameters (Rₚ,Cₚ) of the sensor (10), characterised by a control unit (18) arranged to calculate from one of the measured parameters (Rₚ) a value for the other measured parameter (Cₚₑ) using said predetermined relationships, arranged to compare the calculated value (Cₚₑ) with the measured value (Cₚ) of the other parameter and arranged to detect in dependence on the comparison whether the sensor (10) is in a first condition in which the sensor (10) is subjected to a substantially uniform temperature change over its total length or in a second condition in which a section of the sensor (10) is subjected to a localised temperature change.

2. A system according to claim 1, characterised in that the control unit (18) is arranged to calculate in dependence on the measured value of one said parameter (Rₚ) and on the respective relationship of that parameter (Rₚ) to temperature the corresponding temperature value for the total length of the sensor, further arranged to calculate in dependence on that calculated temperature value and on the predetermined relationship of the other parameter (Cₚ) to temperature the corresponding value for said other parameter (Cₚₑ), and whereby substantial equality of the compared values of said other parameter indicates the first condition and substantial inequality of the compared values of said other parameter indicates the second condition.

3. A system according to claim 2, characterised in that each predetermined relationship relates the value of the respective parameter (Rₚ,Cₚ) to temperature for a given length of the sensor (10), and in that the control unit (18) is arranged to carry out the said comparison of the calculated and measured values (Cₚₑ,Cₚ) when the given length of the sensor is equal to its total length.

4. A system according to claim 1 or 2, characterised in that the control unit (18) is arranged to produce a first output indicative of the first condition and a second output indicative of the second condition and to produce in response to the second output an indication of the length of the localised temperature change and its temperature.

5. A system according to claim 4, characterised in that a respective further predetermined relationship relates the value of each said parameter (Rₚ,Cₚ) to two different values of temperature (T₁,T₂) each for a respective given length (L₁,L₂) of the sensor (10) such that the two given lengths of the sensor (10) are together equal to the total length (L) thereof, and in that the control unit (18) is arranged in dependence on production of the second output to determine the respective given length values and corresponding temperature values which, for the measured values of the two parameters, satisfy both said further predetermined relationships and to indicate the length of the localised temperature change and its temperature.

6. A system according to claim 5, characterised in that the control unit (18) is arranged repeatedly to alter one said given length value and correspondingly to alter the other thereof, and repeatedly to alter one said temperature value, until there are produced respective given length values and corresponding temperature values which, for the measured values of the two parameters, satisfy both said further predetermined relationships.

7. A system according to claim 6, characterised in that the control unit (18) is arranged repeatedly to alter said given length values and said temperature values on an iterative basis.

8. A system according to any preceding claim, characterised in that one said parameter (Rₚ) is electrical resistance, and the other (Cₚ) is electrical capacitance.

9. A system according to claim 8, characterised in that the elongate temperature sensor (10) comprises two electrical conductors (12,14) running along the length of the sensor, the two electrical conductors (12,14) being electrically insulated from each other by a temperature-dependent electrically insulating material (16), and in which the electrical parameters are respectively the electrical resistance (Rₚ) and the electrical capacitance (Cₚ) between the two conductors (12,14).

10. A system according to claim 8 or 9, characterised in that the measuring means (18) comprises means for applying an alternating electrical voltage waveform (Vᵢₙ) between said electrical conductors (12,14).

11. A system according to claim 10, characterised in that the alternating voltage waveform (Vᵢₙ) is applied through a known resistance (Rₛ), and in that the measuring means includes means (24,28) for measuring the voltage developed across the known resistance and the voltage developed across the sensor, and said control unit (18) is arranged to compare the two measured voltages and the phase difference between them and to calculate the values of said electrical resistance (Rₚ) and said electrical capacitance (Cₚ).

12. A system according to any preceding claim, characterised by means for determining the approximate position of the localised temperature change.

13. A system according to claim 9, characterised in that the electrical resistance (Rₚ) decreases with increasing temperature, and in that the control unit (18) is further arranged to determine the approximate position of a section (44) of the sensor (10) subjected to a localised temperature increase, the control unit (18) comprising means (11) for feeding current through one said conductor (12) from one end (40) thereof to the said section (44) and thence to the other conductor (14) through the decreased electrical resistance (R_{A}) resulting from the increased temperature, means (28,18) for measuring the voltage developed across the said one conductor (12) by the said current and determining from the measured voltage the resistance (R₁) of the part of the said one conductor (12) through which the current flows, and in that said control unit (18) is arranged to compare the determined resistance with the resistance calculated in dependence on the known resistance value of the conductor per unit length and to determine the distance along the said conductor (12) between the said one end (40) and the said section (44).

14. A system according to claim 13, characterised by means for feeding current through the said one conductor (12) from the other end (42) thereof, the current flowing to the said section (44) through its end closest the said other end (40) of the conductor (12) and thence to the other conductor (14) through the decreased resistance (R_{A}), means (28,18) for measuring the voltage developed across the said one conductor (12) by the said current and determining from the measured voltage the resistance (R₂) of the said one conductor (12) through which the current flows, and in that said control unit (18) is arranged to compare the determined resistance with the resistance calculated in dependence on the known resistance value of the conductor per unit length and to determine the distance along the said conductor from the said other end (42) thereof to the said section (44), such that a comparison of the two said distances enables an estimate of the length of the said section.

15. A temperature detecting method, comprising the steps of deploying an elongate temperature sensor (10) having two electrical parameters (Rₚ,Cₚ) which vary according to respectively different predetermined relationships with temperature and measuring the said parameters (Rₚ,Cₚ), and characterised by the steps of calculating from one of the measured parameters (Rₚ) a value for the other measured parameter (Cₚₑ) using said predetermined relationships, comparing the calculated value (Cₚₑ) with the measured value (Cₚ) of the other parameter and detecting in dependence on the comparison whether the sensor (10) is in a first condition in which the sensor (10) is subjected to a substantially uniform temperature change over its total length or in a second condition in which a section of the sensor (10) is subjected to a localised temperature change.

16. A method according to claim 15, characterised in that the calculating step comprises the steps of calculating the temperature value for the complete length of the sensor (10) in dependence on the measured value of one said parameter (Rₚ) and on the respective relationship of that parameter (Rₚ) to temperature, using that calculated temperature value and the predetermined relationship of the other parameter to temperature to calculate from that relationship the corresponding value for the other parameter (Cₚₑ), and whereby substantial equality of the compared values of said other parameter indicates the first condition and substantial inequality of the compared values of said other parameter indicates the second condition.

17. A method according to claim 16, characterised in that each predetermined relationship relates the value of the respective parameter (Rₚ,Cₚ) to temperature for a given length of the sensor (10), the said comparing step being operative when the given length of the sensor is equal to its total length.

18. A method according to claim 15 or claim 16, characterised by the step of producing a first output indicative of the first condition and a second output indicative of the second condition, and by the step of responding to the second output to produce an indication of the length of the localised temperature change and its temperature.

19. A method according to claim 18, characterised in that a respective further predetermined relationship relates the value of each parameter (Rₚ,Cₚ) to two different values of temperature (T₁,T₂) each for a respective given length (L₁,L₂) of the sensor (10) such that the two given lengths (L₁,L₂) of the sensor (10) are together equal to the total length (L) thereof, and in that the step of responding to the second output comprises the further step of determining the respective given length values and corresponding temperature values which, for the measured values of the two parameters, satisfy both said further predetermined relationships and indicating the length of the localised temperature change and its temperature.

20. A method according to claim 19, characterised in that the said further step comprises the step of repeatedly altering one said given length value and correspondingly altering the other thereof, and repeatedly altering one said temperature value, until there are produced respective given length values and corresponding temperature values which, for the measured values of the two parameters, satisfy both said further predetermined relationships.

21. A method according to claim 20, characterised in that the further step is carried out iteratively.

22. A method according to any one of claims 15 to 21, characterised in that the elongate temperature sensor comprises two electrical conductors (12,14) and in that the said parameter (Rₚ) is electrical resistance and the other (Cₚ) is electrical capacitance.

23. A method according to claim 22, characterised in that the measuring step comprises the step of applying an alternating electrical voltage waveform (Vᵢₙ) between said electrical conductors (12,14).

24. A method according to claim 23, characterised in that the alternating voltage waveform (Vᵢₙ) is applied through a known resistance (Rₛ), and in that the measuring step includes the step of measuring the voltage developed across the known resistance (Rₛ) and the voltage developed across the sensor (10), comparing the two measured voltages and the phase difference between them and calculating the values of said electrical resistance (Rₚ) and said electrical capacitance (Cₚ).

25. A method according to any one of claims 15 to 24, characterised by the step of determining the approximate position of the localised temperature change.

26. A method according to claim 22, characterised in that the said two electrical conductors (12,14) are electrically insulated from each other by a temperature dependent electrically insulating material (16) running long the length of the sensor and in which the electrical resistance (Rₚ) and the electrical capacitance (Cₚ) are respectively the electrical resistance and the electrical capacitance between the two conductors (12,14), the resistance decreasing with increasing temperature and by the step of determining the approximate position of the section (44) of the sensor (10) subjected to the localised temperature change, the latter step comprising the steps of feeding current through one said conductor (12) from one end (40) thereof to the section (44) and thence to the other conductor (14) through the decreased electrical resistance (R_{A}) resulting from the increased temperature, measuring the voltage developed across the said one conductor (12) by the said current, determining from the measured voltage the resistance (R₁) of the part of the said one conductor (12) through which the current flows, comparing the determined resistance with the resistance calculated in dependence on the known resistance value of the conductor per unit length and determining the distance along the said conductor between the said one end and the said section.

27. A method according to claim 26, characterised by the step of feeding current through the said one conductor (12) from the other end (42) thereof, the current flowing to the said section (44) through its end closest the said other end (42) of the conductor and thence to the other conductor (14) through the decreased resistance (R_{A}), measuring the voltage developed across the said one conductor (12) by the said current, determining from the measured voltage the resistance of the said one conductor (12) through which the current flows, comparing the determined value of the resistance with the resistance calculated in dependence on the known resistance value of the conductor per unit length and determining the distance along the said conductor from the said other end thereof to the said section (44), such that a comparison of the two said distances enables an estimate of the length of the said section (44).

## Patentansprüche

1. Ein Temperaturerfassungssystem, das einen länglichen Temperatursensor (10), der zwei elektrische Parameter (Rₚ, Cₚ) aufweist, die sich gemäß einer jeweils unterschiedlichen vorbestimmten Beziehung mit der Temperatur ändern, und eine Meßeinrichtung (24, 28, 18) zur Messung der genannten Parameter (Rₚ, Cₚ) des Sensors (10) umfaßt, **gekennzeichnet durch** eine Steuereinheit (18), die ausgebildet ist, von einem der gemessenen Parameter (Rₚ) einen Wert für den anderen gemessenen Parameter (Cₚₑ) unter Verwendung der genannten vorbestimmten Beziehungen zu berechnen, die ausgebildet ist, den berechneten Wert (Cₚₑ) mit dem gemessenen Wert (Cₚ) des anderen Parameters zu vergleichen, und ausgebildet ist, in Abhängigkeit von dem Vergleich zu bestimmen, ob der Sensor (10) in einem ersten Zustand ist, in dem der Sensor (10) einer im wesentlichen gleichförmigen Temperaturänderung über seine Gesamtlänge ausgesetzt ist, oder in einem zweiten Zustand ist, in dem ein Abschnitt des Sensors (10) einer örtlichen Temperaturänderung ausgesetzt wird.

2. Ein System gemäß Anspruch 1, **dadurch gekennzeichnet**, daß die Steuereinheit (18) ausgebildet ist, in Abhängigkeit von dem gemessenen Wert eines genannten Parameters (Rₚ) und der jeweiligen Beziehung dieses Parameters (Rₚ) zu der Temperatur den entsprechenden Temperaturwert für die Gesamtlänge des Sensors zu berechnen, und des weiteren ausgebildet ist, in Abhängigkeit von diesem berechneten Temperaturwert und von der vorbestimmten Beziehung des anderen Parameters (Cₚ) zu der Temperatur den entsprechenden Wert für den genannten anderen Parameter (Cₚₑ) zu berechnen, und wobei eine im wesentlichen Gleichheit der verglichenen Werte des genannten anderen Parameters den ersten Zustand angibt und eine im wesentlichen Ungleichheit der verglichenen Werte des genannten anderen Parameters den zweiten Zustand angibt.

3. Ein System gemäß Anspruch 2, **dadurch gekennzeichnet**, daß jede vorbestimmte Beziehung den Wert des entsprechenden Parameters (Rₚ, Cₚ) zu der Temperatur für eine gegebene Länge des Sensors (10) in Beziehung setzt, und daß die Steuereinheit (18) ausgebildet ist, den genannten Vergleich der berechneten und gemessenen Werte (Cₚₑ, Cₚ) auszuführen, wenn die gegebene Länge des Sensors gleich seiner Gesamtlänge ist.

4. Ein System gemäß Anspruch 1 oder 2, **dadurch gekennzeichnet**, daß die Steuereinheit (18) ausgebildet ist, einen ersten Ausgang, der den ersten Zustand angibt, und einen zweiten Ausgang zu erzeugen, der den zweiten Zustand angibt, um in Reaktion auf den zweiten Ausgang eine Angabe über die Länge der örtlichen Temperaturänderung und seiner Temperatur anzugeben.

5. Ein System gemäß Anspruch 4, daß eine entsprechende weitere vorbestimmte Beziehung den Wert von jedem genannten Parameter (Rₚ, Cₚ) mit zwei unterschiedlichen Werten der Temperatur (T₁, T₂) in Beziehung setzt, jede für eine entsprechende gegebene Länge (L₁, L₂) des Sensors (10), so daß die zwei gegebenen Längen des Sensors (10) zusammen gleich seiner Gesamtlänge (L) sind, und daß die Steuereinheit (18) ausgebildet ist, in Abhängigkeit von der Erzeugung des zweiten Ausgangs die entsprechenden gegebenen Längenwerte und entsprechenden Temperaturwerte zu bestimmen, die für die gemessenen Werte der zwei Parameter beide die genannten weiteren vorbestimmten Beziehungen erfüllen, und um die Länge der örtlichen Temperaturänderung und ihre Temperatur anzugeben.

6. Ein System gemäß Anspruch 5, **dadurch gekennzeichnet,** daß die Steuereinheit (18) ausgebildet ist, wiederholt einen genannten gegebenen Längenwert zu ändern und entsprechend den anderen davon zu ändern und wiederholt einen genannten Temperaturwert zu ändern, bis es erzeugte jeweilige gegebene Längenwerte und entsprechende Temperaturwerte gibt, die für die gemessenen Werte der zwei Parameter beide die genannten weiteren vorbestimmten Beziehungen erfüllen.

7. Ein System gemäß Anspruch 6, **dadurch gekennzeichnet**, daß die Steuereinheit (18) ausgebildet ist, wiederholt die genannten gegebenen Längenwerte und die genannten Temperaturwerte auf einer iterativen Grundlage zu ändern.

8. Ein System gemäß irgendeinem vorhergehenden Anspruch, **dadurch gekennzeichnet**, daß ein genannter Parameter (Rₚ) der elektrische Widerstand und der andere (Cₚ) die elektrische Kapazität ist.

9. Ein System gemäß Anspruch 8, **dadurch gekennzeichnet**, daß der längliche Temperatursensor (10) zwei elektrische Leiter (12, 14) umfaßt, die über die Länge des Sensors laufen, wobei die zwei elektrischen Leiter (12, 14) elektrisch voneinander durch ein temperaturabhängiges, elektrischisolierendes Material (16) elektrisch isoliert sind, und in dem die elektrischen Parameter jeweils der elektrische Widerstand (Rₚ) und die elektrische Kapazität (Cₚ) zwischen den zwei Leitern (12, 14) sind.

10. Ein System gemäß Anspruch 8 oder 9, **dadurch gekennzeichnet**, daß die Meßeinrichtung (18) eine Einrichtung umfaßt, um eine elektrische Wechselspannungswellenform (Vₑᵢₙ) zwischen die genannten elektrischen Leiter (12, 14) zu legen.

11. Ein System gemäß Anspruch 10, **dadurch gekennzeichnet**, daß die Wechselspannungswellenform (Vₑᵢₙ) über einen bekannten Widerstand (Rₛ) angelegt wird, und daß die Meßeinrichtung eine Einrichtung (24, 28) zum Messen der Spannung einschließt, die über den bekannten Widerstand erzeugt wird, und der Spannung, die über den Sensor erzeugt wird, und die genannte Steuereinheit (18) ausgebildet ist, die zwei gemessenen Spannungen und die Phasendifferenz zwischen ihnen zu vergleichen und die Werte des genannten elektrischen Widerstands (Rₚ) und der genannten elektrischen Kapazität (Cₚ) zu berechnen.

12. Ein System gemäß irgendeinem der vorhergehenden Ansprüche, **gekennzeichnet durch** eine Einrichtung, um die ungefähre Position der örtlichen Temperaturänderung zu bestimmen.

13. Ein System gemäß Anspruch 9, **dadurch gekennzeichnet**, daß der elektrische Widerstand (Rₚ) mit zunehmender Temperatur abnimmt und daß die Steuereinheit (18) des weiteren ausgebildet ist, die ungefähre Position eines Abschnitts (44) des Sensors (10) zu bestimmen, der einer örtlichen Temperaturerhöhung ausgesetzt ist, wobei die Steuereinheit (18) eine Einrichtung (11) umfaßt, um Strom durch einen genannten Leiter (12) von seinem einen Ende (40) zu dem genannten Abschnitt (44) zuzuführen, und dann zu dem anderen Leiter (14) durch den verringerten elektrischen Widerstand (R_{A}), der sich aus der erhöhten Temperatur ergibt, eine Einrichtung (28, 18) zum Messen der über den genannten einen Leiter (12) durch den genannten Strom erzeugten Spannung und zum Bestimmen des Widerstands (R₁) des Teils des genannten einen Leiters (12) aus der gemessenen Spannung, durch den der Strom fließt, und daß die genannte Steuereinheit (18) ausgebildet ist, den bestimmten Widerstand mit dem berechneten Widerstand in Abhängigkeit von dem bekannten Widerstandswert des Leiters pro Einheitslänge zu vergleichen und den Abstand zwischen dem genannten einen Ende (40) und dem genannten Abschnitt (44) entlang dem genannten Leiter (12) zu bestimmen.

14. Ein System gemäß Anspruch 13, **gekennzeichnet durch** eine Einrichtung zur Zufuhr von Strom durch den genannten einen Leiter (12) von dessen anderem Ende (42), wobei der Strom zu dem genannten Abschnitt (44) durch sein dem genannten anderen Ende (40) des Leiters (12) nahesten Ende und dann zu dem anderen Leiter (14) durch den verringerten Widerstand (R_{A}) hindurchfließt, eine Einrichtung (28, 18) zum Messen der Spannung, die über den genannten einen Leiter (12) durch den genannten Strom erzeugt wird, und zum Bestimmen des Widerstands (R₂) des genannten einen Leiters (12), durch den der Strom fließt, aus der gemessenen Spannung, und wobei die genannte Steuereinheit (18) ausgebildet ist, den bestimmten Widerstand mit dem Widerstand zu vergleichen, der in Abhängigkeit von dem bekannten Widerstandswert des Leiters pro Einheitslänge berechnet wird, und den Abstand entlang dem genannten Leiter von dessen genanntem anderen Ende (42) bis zu dem genannten Abschnitt (44) so zu bestimmen, daß ein Vergleich der zwei genannten Abstände eine Abschätzung der Länge des genannten Abschnitts ermöglicht.

15. Ein Temperaturerfassungsverfahren, das die Schritte umfaßt, einen länglichen Temperatursensor (10) zu verwenden, der zwei elektrische Parameter (Rₚ, Cₚ) aufweist, die sich gemäß einer jeweils unterschiedlichen vorbestimmten Beziehung mit der Temperatur ändern, und die genannten Parameter (Rₚ, Cₚ) zu messen, und **gekennzeichnet durch** die Schritte von einem der gemessenen Parameter (Rₚ) einen Wert für den anderen gemessenen Parameter (Cₚₑ) unter Verwendung der genannten vorbestimmten Beziehungen zu berechnen, den berechneten Wert (Cₚₑ) mit dem gemessenen Wert (Cₚ) des anderen Parameters zu vergleichen, und in Abhängigkeit von dem Vergleich zu bestimmen, ob der Sensor (10) in einem ersten Zustand ist, in dem der Sensor (10) einer im wesentlichen gleichförmigen Temperaturänderung über seine Gesamtlänge ausgesetzt ist, oder in einem zweiten Zustand ist, in dem ein Abschnitt des Sensors (10) einer örtlichen Temperaturänderung ausgesetzt wird.

16. Ein Verfahren gemäß Anspruch 15, **dadurch gekennzeichnet**, daß der Berechnungsschritt die Schritte umfaßt, den Temperaturwert für die gesamte Länge des Sensors (10) in Abhängigkeit von dem gemessenen Wert eines genannten Parameters (Rₚ) und der jeweiligen Beziehung dieses Parameters (Rₚ) zu der Temperatur zu berechnen, und des weiteren ausgebildet ist, unter Verwendung dieses berechneten Temperaturwerts und der vorbestimmten Beziehung des anderen Parameters (Cₚ) zu der Temperatur aus dieser Beziehung den entsprechenden Wert für den genannten anderen Parameter (Cₚₑ) zu berechnen, und wobei eine im wesentlichen Gleichheit der verglichenen Werte des genannten anderen Parameters den ersten Zustand angibt und eine im wesentlichen Ungleichheit der verglichenen Werte des genannten anderen Parameters den zweiten Zustand angibt.

17. Ein Verfahren gemäß Anspruch 16, **dadurch gekennzeichnet**, daß jede vorbestimmte Beziehung den Wert des entsprechenden Parameters (Rₚ, Cₚ) zu der Temperatur für eine gegebene Länge des Sensors (10) in Beziehung setzt, und daß der Vergleichschritt arbeitet, wenn die gegebene Länge des Sensors gleich seiner Gesamtlänge ist.

18. Ein Verfahren gemäß Anspruch 15 oder 16, **gekennzeichnet** durch den Schritt, einen ersten Ausgang, der den ersten Zustand angibt, und einen zweiten Ausgang zu erzeugen, der den zweiten Zustand angibt, und durch den Schritt, auf den zweiten Ausgang zu reagieren, um eine Angabe über die Länge der örtlichen Temperaturänderung und seiner Temperatur anzugeben.

19. Ein Verfahren gemäß Anspruch 18, **dadurch gekennzeichnet**, daß eine entsprechende weitere vorbestimmte Beziehung den Wert von jedem genannten Parameter (Rₚ, Cₚ) mit zwei unterschiedlichen Werten der Temperatur (T₁, T₂) in Beziehung setzt, jede für eine entsprechende gegebene Länge (L₁, L₂) des Sensors (10), so daß die zwei gegebenen Längen des Sensors (10) zusammen gleich seiner Gesamtlänge (L) sind, und daß der Schritt auf den zweiten Ausgang zu reagieren, den weiteren Schritt umfaßt, die entsprechenden gegebenen Längenwerte und entsprechenden Temperaturwerte zu bestimmen, die für die gemessenen Werte der zwei Parameter beide die genannten weiteren vorbestimmten Beziehungen erfüllen, und um die Länge der örtlichen Temperaturänderung und ihre Temperatur anzugeben.

20. Ein Verfahren gemäß Anspruch 19, **dadurch gekennzeichnet**, daß der genannte weitere Schritt den Schritt umfaßt, wiederholt einen genannten gegebenen Längenwert zu ändern und entsprechend den anderen davon zu ändern und wiederholt einen genannten Temperaturwert zu ändern, bis es erzeugte jeweilige gegebene Längenwerte und entsprechende Temperaturwerte gibt, die für die gemessenen Werte der zwei Parameter beide die genannten weiteren vorbestimmten Beziehungen erfüllen.

21. Ein Verfahren gemäß Anspruch 20, **dadurch gekennzeichnet**, daß der weiter Schritt iterativ ausgeführt wird.

22. Ein Verfahren gemäß irgendeinem der Ansprüche 15 bis 21, **dadurch gekennzeichnet**, daß der genannte Temperatursensor (10) zwei elektrische Leiter (12, 14) umfaßt und daß der genannte Parameter (Rₚ) der elektrische Widerstand und der andere (Cₚ) die elektrische Kapazität ist.

23. Ein Verfahren gemäß Anspruch 22, **dadurch gekennzeichnet**, daß der Meßschritt den Schritt umfaßt, eine elektrische Wechselspannungswellenform (Vₑᵢₙ) zwischen die genannten elektrischen Leiter (12, 14) zu legen.

24. Ein Verfahren gemäß Anspruch 23, **dadurch gekennzeichnet,** daß die Wechselspannungswellenform (Vₑᵢₙ) über einen bekannten Widerstand (Rₛ) angelegt wird, und daß der Meßschritt den Schritt einschließt, die über den bekannten Widerstand erzeugte Spannung und die über den Sensor erzeugte Spannung zu messen, die zwei gemessenen Spannungen und die Phasendifferenz zwischen ihnen zu vergleichen und die Werte des genannten elektrischen Widerstands (Rₚ) und der genannten elektrischen Kapazität (Cₚ) zu berechnen.

25. Ein Verfahren gemäß irgendeinem der Ansprüche 15 bis 24, **gekennzeichnet durch** den Schritt die ungefähre Position der örtlichen Temperaturänderung zu bestimmen.

26. Ein Verfahren gemäß Anspruch 22, dadurch gekennzeichnet, daß die zwei elektrischen Leiter (12, 14) elektrisch voneinander durch ein temperaturabhängiges, elektrischisolierendes Material (16) elektrisch isoliert sind, das über die Länge des Sensors läuft, und in dem der elektrische Widerstand (Rₚ) und die elektrische Kapazität (Cₚ) der elektrische Widerstand und die elektrische Kapazität zwischen den zwei Leitern (12, 14) sind, wobei der elektrische Widerstand (Rₚ) mit zunehmender Temperatur abnimmt, und durch den Schritt, die ungefähre Position eines Abschnitts (44) des Sensors (10) zu bestimmen, der einer örtlichen Temperaturerhöhung ausgesetzt ist, wobei der letztere Schritt die Schritte umfaßt, Strom durch einen genannten Leiter (12) von seinem einen Ende (40) zu dem genannten Abschnitt (44) zuzuführen, und dann zu dem anderen Leiter (14) durch den verringerten elektrischen Widerstand (R_{A}), der sich aus der erhöhten Temperatur ergibt, die über den genannten einen Leiter (12) durch den genannten Strom erzeugte Spannung zu messen, den Widerstand (Rᵢ) des Teils des genannten einen Leiters (12) aus der gemessenen Spannung zu bestimmen, durch den der Strom fließt, den bestimmten Widerstand mit dem berechneten Widerstand zu vergleichen, der in Abhängigkeit von dem bekannten Widerstandswert des Leiters pro Einheitslänge berechnet wurd, und den Abstand zwischen dem genannten einen Ende und dem genannten Abschnitt entlang dem genannten Leiter zu bestimmen.

27. Ein System gemäß Anspruch 26, **gekennzeichnet durch** den Schritt, Strom durch den genannten einen Leiter (12) von dessen anderem Ende (42) zu zuführen, wobei der Strom zu dem genannten Abschnitt (44) durch sein dem genannten anderen Ende (40) des Leiters (12) nahesten Ende und dann zu dem anderen Leiter (14) durch den verringerten Widerstand (R_{A}) hindurchfließt, die Spannung, die über den genannten einen Leiter (12) durch den genannten Strom erzeugt wird, zu messen, den Widerstand (R₂) des genannten einen Leiters (12), durch den der Strom fließt, aus der gemessenen Spannung zu bestimmen, den bestimmten Widerstand mit dem Widerstand zu vergleichen, der in Abhängigkeit von dem bekannten Widerstandswert des Leiters pro Einheitslänge berechnet wird, und den Abstand entlang dem genannten Leiter von dessen genanntem anderen Ende (42) bis zu dem genannten Abschnitt (44) zu bestimmen, so daß ein Vergleich der zwei genannten Abstände eine Abschätzung der Länge des genannten Abschnitts ermöglicht.

## Revendications

1. Système de détection de température comprenant un capteur de température allongé (10) comportant deux paramètres électriques (Rₚ, Cₚ) qui varient conformément à des relations prédéterminées respectivement différentes en fonction de la température et un moyen de mesure (24, 28, 18) pour mesurer lesdits paramètres (Rₚ, Cₚ) du capteur (10), caractérisé par une unité de commande (18) agencée pour calculer, à partir de l'un des paramètres mesurés (Rₚ), une valeur pour l'autre paramètre mesuré (Cₚₑ) en utilisant lesdites relations prédéterminées, agencée pour comparer la valeur calculée (Cₚₑ) avec la valeur mesurée (Cₚ) de l'autre paramètre et agencée pour détecter, sur la base de la comparaison, si le capteur (10) est dans une première condition dans laquelle le capteur (10) est soumis à une variation de température sensiblement uniforme sur la totalité de sa longueur ou dans une seconde condition dans laquelle une section du capteur (10) est soumise à une variation de température localisée.

2. Système selon la revendication 1, caractérisé en ce que l'unité de commande (18) est agencée pour calculer, sur la base de la valeur mesurée d'un dit paramètre (Rₚ) et sur la base de la relation respective de ce paramètre (Rₚ) par rapport à la température, la valeur de température correspondante pour la longueur totale du capteur, est agencée en outre pour calculer, sur la base de cette valeur de température calculée et sur la base de la relation prédéterminée de l'autre paramètre (Cₚ) par rapport à la température, la valeur correspondante pour ledit autre paramètre (Cₚₑ) et ainsi, une égalité substantielle des valeurs comparées dudit autre paramètre indique la première condition et une inégalité substantielle des valeurs comparées dudit autre paramètre indique la seconde condition.

3. Système selon la revendication 2, caractérisé en ce que chaque relation prédéterminée rapporte la valeur du paramètre respectif (Rₚ, Cₚ) à une température pour une longueur donnée du capteur (10) et en ce que l'unité de commande (18) est agencée pour mettre en oeuvre ladite comparaison des valeurs calculées et mesurées (Cₚₑ, Cₚ) lorsque la longueur donnée du capteur est égale à sa longueur totale.

4. Système selon la revendication 1 ou 2, caractérisé en ce que l'unité de commande (18) est agencée pour produire une première sortie indicative de la première condition et une seconde sortie indicative de la seconde condition et pour produire en réponse à la seconde sortie une indication de la longueur de la variation de température localisée et de sa température.

5. Système selon la revendication 4, caractérisé en ce qu'une autre relation prédéterminée respective rapporte la valeur de chaque dit paramètre (Rₚ, Cₚ) à deux valeurs différentes de température (T₁, T₂), chacune pour une longueur donnée respective (L₁, L₂) du capteur (10), de telle sorte que les deux longueurs données du capteur (10) soient ensemble égales à sa longueur totale (L) et en ce que l'unité de commande (18) est agencée pour, sur la base de la production de la seconde sortie, déterminer les valeurs de longueur données respectives et les valeurs de température correspondantes qui, pour les valeurs mesurées des deux paramètres, satisfont à la fois lesdites autres relations prédéterminées et pour indiquer la longueur de la variation de température localisée et sa température.

6. Système selon la revendication 5, caractérisé en ce que l'unité de commande (18) est agencée pour, de façon répétée, altérer une dite valeur de longueur donnée et altérer en correspondance l'autre dite valeur de longueur donnée et pour, de façon répétée, altérer une dite valeur de température jusqu'à ce que soient produites des valeurs de longueur données respectives et des valeurs de température correspondantes qui, pour les valeurs mesurées des deux paramètres, satisfont à la fois lesdites autres relations prédéterminées.

7. Système selon la revendication 6, caractérisé en ce que l'unité de commande (18) est agencée pour, de manière répétée, altérer lesdites valeurs de longueur données et lesdites valeurs de température sur une base itérative.

8. Système selon l'une quelconque des revendications précédentes, caractérisé en ce qu'un dit paramètre (Rp) est une résistance électrique et l'autre (Cp) est une capacité électrique.

9. Système selon la revendication 8, caractérisé en ce que le capteur de température allongé (10) comprend deux conducteurs électriques (12, 14) qui courent le long de la longueur du capteur, les deux conducteurs électriques (12, 14) étant isolés électriquement l'un de l'autre par un matériau électriquement isolant dépendant de la température (16) et dans lequel les paramètres électriques sont respectivement la résistance électrique (Rₚ) et la capacité électrique (Cp) entre les deux conducteurs (12, 14).

10. Système selon la revendication 8 ou 9, caractérisé en ce que le moyen de mesure (18) comprend un moyen pour appliquer une forme d'onde de tension électrique alternative (Vᵢₙ) entre lesdits conducteurs électriques (12, 14).

11. Système selon la revendication 10, caractérisé en ce que la forme d'onde de tension alternative (Vᵢₙ) est appliquée au travers d'une résistance connue (Rₛ) et en ce que le moyen de mesure inclut un moyen (24, 28) pour mesurer la tension développée aux bornes de la résistance connue et la tension développée aux bornes du capteur, et ladite unité de commande (18) est agencée pour comparer les deux tensions mesurées, pour apprécier la différence de phase entre elles et pour calculer les valeurs de ladite résistance électrique (Rₚ) et de ladite capacité électrique (Cₚ).

12. Système selon l'une quelconque des revendications précédentes, caractérisé par un moyen pour déterminer la position approchée de la variation de température localisée.

13. Système selon la revendication 9, caractérisé en ce que la résistance électrique (Rₚ) diminue lorsque la température augmente et en ce que l'unité de commande (18) est en outre agencée pour déterminer la position approchée d'une section (44) du capteur (10) soumise à une augmentation de température localisée, l'unité de commande (18) comprenant un moyen (11) pour appliquer un courant au travers d'un dit conducteur (12) depuis une extrémité (40) de celui-ci jusqu'à ladite section (44) et à partir de là, jusqu'à l'autre conducteur (14) par l'intermédiaire de la résistance électrique diminuée (R_{A}) résultant de la température augmentée, un moyen (28, 18) pour mesurer la tension développée aux bornes dudit un conducteur (12) par ledit courant et pour déterminer à partir de la tension mesurée la résistance (R₁) de la partie dudit un conducteur (12) au travers de laquelle le courant circule et en ce que ladite unité de commande (18) est agencée pour comparer la résistance déterminée avec la résistance calculée sur la base de la valeur de résistance connue du conducteur par longueur unitaire et pour déterminer la distance suivant ledit conducteur (12) entre ladite une extrémité (40) et ladite section (44).

14. Système selon la revendication 13, caractérisé par un moyen pour appliquer un courant au travers dudit un conducteur (12) depuis l'autre extrémité (42) de celui-ci, le courant circulant jusqu'à ladite section (44) au travers de son extrémité la plus proche de ladite autre extrémité (40) du conducteur (12) et à partir de là, jusqu'à l'autre conducteur (14) au travers de la résistance diminuée (R_{A}), un moyen (28, 18) pour mesurer la tension développée aux bornes dudit un conducteur (12) par ledit courant et pour déterminer à partir de la tension mesurée la résistance (R₂) dudit un conducteur (12) au travers duquel le courant circule et en ce que ladite unité de commande (18) est agencée pour comparer la résistance déterminée avec la résistance calculée sur la base de la valeur de résistance connue du conducteur par longueur unitaire et pour déterminer la distance suivant ledit conducteur depuis ladite autre extrémité (42) de celui-ci jusqu'à ladite section (44) de telle sorte qu'une comparaison des deux dites distances permette une estimation de la longueur de ladite section.

15. Procédé de détection de température, comprenant les étapes de déploiement d'un capteur de température allongé (10) comportant deux paramètres électriques (Rₚ, Cₚ) qui varient conformément à des relations prédéterminées respectivement différentes en fonction de la température et de mesure desdits paramètres (Rₚ, Cₚ), et caractérisé par les étapes de calcul, à partir de l'un des paramètres mesurés (Rₚ), d'une valeur pour l'autre paramètre mesuré (Cₚₑ) en utilisant lesdites relations prédéterminées, de comparaison de la valeur calculée (Cₚₑ) avec la valeur mesurée (Cₚ) de l'autre paramètre et de détection, sur la base de la comparaison, de si le capteur (10) est dans une première condition dans laquelle le capteur (10) est soumis à une variation de température sensiblement uniforme sur la totalité de sa longueur ou dans une seconde condition dans laquelle une section du capteur (10) est soumise à une variation de température localisée.

16. Procédé selon la revendication 15, caractérisé en ce que l'étape de calcul comprend les étapes de calcul de la valeur de température pour la longueur complète du capteur (10) sur la base de la valeur mesurée d'un dit paramètre (Rₚ) et sur la base de la relation respective de ce paramètre (Rₚ) par rapport à la température, d'utilisation de cette valeur de température calculée et de la relation prédéterminée de l'autre paramètre par rapport à la température pour calculer à partir de cette relation la valeur correspondante pour l'autre paramètre (Cₚₑ) et ainsi, une égalité substantielle des valeurs comparées dudit autre paramètre indique la première condition et une inégalité substantielle des valeurs comparées dudit autre paramètre indique la seconde condition.

17. Procédé selon la revendication 16, caractérisé en ce que chaque relation prédéterminée rapporte la valeur du paramètre respectif (Rₚ, Cₚ) à la température pour une longueur donnée du capteur (10), ladite étape de comparaison étant opérante lorsque la longueur donnée du capteur est égale à sa longueur totale.

18. Procédé selon la revendication 15 ou 16, caractérisé par l'étape de production d'une première sortie indicative de la première condition et d'une seconde sortie indicative de la seconde condition et par l'étape de réponse à la seconde sortie pour produire une indication de la longueur de la variation de température localisée et de sa température.

19. Procédé selon la revendication 18, caractérisé en ce qu'une autre relation prédéterminée respective rapporte la valeur de chaque paramètre (Rₚ, Cₚ) à deux valeurs différentes de température (T₁, T₂), chacune pour une longueur donnée respective (L₁, L₂) du capteur (10), de telle sorte que les deux longueurs données (L₁, L₂) du capteur (10) soient ensemble égales à sa longueur totale (L) et en ce que l'étape de réponse à la seconde sortie comprend l'étape supplémentaire de détermination des valeurs de longueur données respectives et des valeurs de température correspondantes qui, pour les valeurs mesurées des deux paramètres, satisfont à la fois lesdites autres relations prédéterminées et d'indication de la longueur de la variation de température localisée et de sa température.

20. Procédé selon la revendication 19, caractérisé en ce que ladite étape supplémentaire comprend l'étape consistant à, de façon répétée, altérer une dite valeur de longueur donnée et à altérer en correspondance l'autre et consistant à, de façon répéter, altérer une dite valeur de température jusqu'à ce que des valeurs de longueur données respectives et des valeurs de températures correspondantes qui, pour les valeurs mesurées des deux paramètres, satisfont à la fois lesdites autres relations prédéterminées soient produites.

21. Procédé selon la revendication 20, caractérisé en ce que l'étape supplémentaire est mise en oeuvre de façon itérative.

22. Procédé selon l'une quelconque des revendications 15 à 21, caractérisé en ce que le capteur de température allongé comprend deux conducteurs électriques (12, 14) et en ce que ledit paramètre (Rp) est une résistance électrique et l'autre (Cₚ) est une capacité électrique.

23. Procédé selon la revendication 22, caractérisé en ce que l'étape de mesure comprend l'étape d'application d'une forme d'onde de tension électrique alternative (Vᵢₙ) entre lesdits conducteurs électriques (12, 14).

24. Procédé selon la revendication 23, caractérisé en ce que la forme d'onde de tension alternative (Vᵢₙ) est appliquée au travers d'une résistance connue (Rₛ) et en ce que l'étape de mesure inclut l'étape de mesure de la tension développée aux bornes de la résistance connue (Rₛ) et de la tension développée aux bornes du capteur (10), de comparaison des deux tensions mesurées et d'appréciation de la différence de phase entre elles et de calcul des valeurs de ladite résistance électrique (Rₚ) et de ladite capacité électrique (Cₚ).

25. Procédé selon l'une quelconque des revendications 15 à 24, caractérisé par l'étape de détermination de la position approchée de la variation de température localisée.

26. Procédé selon la revendication 22, caractérisé en ce que lesdits deux conducteurs électriques (12, 14) sont isolés électriquement l'un de l'autre par un matériau électriquement isolant dépendant de la température (16) qui court le long de la longueur du capteur et dans lequel la résistance électrique (Rₚ) et la capacité électrique (Cₚ) sont respectivement la résistance électrique et la capacité électrique entre les deux conducteurs (12, 14), la résistance diminuant lorsque la température augmente, et par l'étape de détermination de la position approchée de la section (44) du capteur (10) soumise à la variation de température localisée, la dernière étape comprenant les étapes d'application d'un courant au travers dudit un conducteur (12) depuis une extrémité (40) de celui-ci jusqu'à la section (44) et à partir de là, jusqu'à l'autre conducteur (14) au travers de la résistance électrique diminuée (R_{A}) résultant de la température augmentée, de mesure de la tension développée aux bornes dudit un conducteur (12) par ledit courant, de détermination à partir de la tension mesurée de la résistance (R₁) de la partie dudit un conducteur (12) au travers de laquelle le courant circule, de comparaison de la résistance déterminée avec la résistance calculée sur la base de la valeur de résistance connue du conducteur par longueur unitaire et de déterminations de la distance suivant ledit conducteur entre ladite une extrémité et ladite section.

27. Procédé selon la revendication 26, caractérisé par l'étape d'application d'un courant au travers dudit un conducteur (12) depuis son autre extrémité (42), le courant circulant jusqu'à ladite section (44) au travers de son extrémité la plus proche de ladite autre extrémité (42) du conducteur et à partir de là, jusqu'à l'autre conducteur (14) au travers de la résistance diminuée (R_{A}), de mesure de la tension développée aux bornes dudit un conducteur (12) par ledit courant, de détermination à partir de la tension mesurée de la résistance dudit un conducteur (12) au travers duquel le courant circule, de comparaison de la valeur déterminée de la résistance avec la résistance calculée sur la base de la valeur de résistance connue du conducteur par longueur unitaire et de détermination de la distance suivant ledit conducteur depuis sa dite autre extrémité jusqu'à ladite section (44) de telle sorte qu'une comparaison des deux dites distances permette une estimation de la longueur de ladite section (44).
